# EUROPÄISCHE PATENTSCHRIFT

(11) **EP 3 776 836 B1**
(45) Veröffentlichungstag und Bekanntmachung des Hinweises auf die Patenterteilung: **20.09.2023**
(21) Anmeldenummer: 19752926.6
(22) Anmeldetag: 22.07.2019
(51) Int. Cl.: H02M 7/5387, B60L 15/00

(54) **MODULARER STROMRICHTER**
MODULAR POWER CONVERTER
CONVERTISSEUR DE COURANT MODULAIRE

(30) Priorität: 31.07.2018 EP 18000636
(43) Veröffentlichungstag der Anmeldung: 17.02.2021
(73) Patentinhaber: Siemens Aktiengesellschaft, 80333 München (DE)
(72) Erfinder: BAKRAN, Mark-Matthias, 91052 Erlangen (DE); BÖHMER, Jürgen, 90547 Stein (DE); HELSPER, Martin, 90584 Allersberg (DE); KRAFFT, Eberhard Ulrich, 90419 Nürnberg (DE); LASKA, Bernd, 91074 Herzogenaurach (DE); NAGEL, Andreas, 90431 Nürnberg (DE); SCHÖNEWOLF, Stefan Hans Werner, 90489 Nürnberg (DE); WEIGEL, Jan, 91077 Großenbuch (DE)
(74) Vertreter: Siemens Patent Attorneys
(86) Internationale Anmeldenummer: PCT/EP2019/069649
(87) Internationale Veröffentlichungsnummer: WO 2020/025376

(56) Entgegenhaltungen:
- EP-A1- 3 184 351
- DE-A1-102013 215 992
- DE-U1- 8 810 279
- KR-B1- 100 970 566
- US-A1- 2013 248 883

## Beschreibung

Die Erfindung betrifft einen modularen Stromrichter mit Wide-Bandgap-Halbleitern. Ferner betrifft die Erfindung ein Fahrzeug, insbesondere ein Schienenfahrzeug, mit einem derartigen modularen Stromrichter.

Halbleiter mit breitem Bandabstand (englisch wide-bandgap semiconductors, davon abgeleitet Wide-Bandgap-Halbleiter aber breitbandige Halbleiter) sind Halbleiter, deren Bandabstand/- Bandlücke (Energieabstand zwischen Valenzband und Leitungsband) am oberen Ende des Bereichs der Halbleiter (3 eV bis über 4 eV) liegt (Quelle: Wikipedia.de). Diese kommen aufgrund ihrer Leistungsfähigkeit voraussichtlich in naher Zukunft auch in dem Antrieb von Fahrzeugen zum Einsatz. Diese Antriebe werden auch als Traktion, die dazugehörigen Stromrichter als Traktionsumrichter bezeichnet. Halbleiter auf der Basis von Siliziumcarbid (SiC), SiC Halbleiter, sind Wide-Bandgap-Halbleiter.

Traktionsumrichter für Bahnantriebe sind durch einen großen Einsatzbereich geprägt. Der Leistungsbereich liegt auf der Motorseite in dem Bereich von etwa 100kW bis 2000kW. Bei der Eingangsspannung muss der Bereich von 750V bis 3000V abgedeckt werden. Die zukünftig eingesetzten SiC Halbleiter (MOSFET) zeigen die typische Charakteristik eines unipolaren Bauelementes, nämlich, dass die Leistungsfähigkeit stark nachlässt bei höheren Auslegungsspannungen. Es gilt der Zusammenhang, dass R_{DS on} in etwa proportional zu Uₛₚₑᵣᵣ^{2,5} ist. Ferner haben SiC Halbleiter pro Chip nur eine geringe Stromtragfähigkeit.

Der heutige Stand der Technik bei Traktionsumrichtern ist der Einsatz von IGBTs. Diese existieren heute in passenden Spannungsklassen, bei Traktionsumrichtern in Schienenfahrzeugen typisch 1700V, 3300V und 6500V, womit sie direkt zu den Bahnbetriebsspannungen 750V, 1500V und 3000V DC passen. Auch existieren viele Stromklassen. Der Stand der Technik ist damit die Verwendung eines passenden IGBT Halbleiters für die jeweils benötigte Spannungs- und Stromklasse des Traktionsumrichters im Schienenfahrzeug.

Aus der KR 100 970 566 B1 ist ein Multilevel Umrichter mit H-Brücken für eine AC zu DC Leistungsumwandlung bekannt. Damit werden eine Vielzahl von Gleichspannungsquellen geschaffen.

Die US 2013/248883 A1 bezieht sich auf ein Leistungsmodul, das ein Gehäuse mit einer Innenkammer und eine Vielzahl von Schaltmodulen aufweist, die miteinander verbunden sind, um das Schalten von Leistung zu einer Last zu erleichtern. Jedes der mehreren Schaltmodule umfasst mindestens einen Transistor und mindestens eine Diode. Die Schaltmodule können je nach Anwendung beispielsweise in einem Sechserverband, einer vollen H-Brücke, einer halben H-Brücke, einem einzelnen Schalter oder ähnlichem angeordnet sein.

Aus der DE 10 2013 215 992 A1 ist eine dreiphasige Mehrpunkt-Stromrichteranordnung als AC/AC-Umrichter bekannt. Die Schaltverluste bei einem Frequenzumrichter sollen demnach bei einem einfach aufgebauten Frequenzumrichter reduziert werden. Dafür wird eine dreiphasige Mehrpunkt-Stromrichteranordnung mit einem gemeinsamen Spannungszwischenkreis bereitgestellt. Dieser weist zwei dreiphasige Mehrpunkt-Stromrichter in Backto-Back-Kombination auf.

Aus der DE 88 10 279 U1 ist ein Umrichter aus parallel auf eine Last arbeitenden Teilumrichtern mit Gleichstromzwischenkreis bekannt, wobei eine magnetische Kopplung der Drosseln der Teilumrichter vorhanden ist, so dass eine Änderung des Gleichstromes im Gleichstromzwischenkreis eines Teilumrichters eine Änderung des Gleichstroms im anderen Teilumrichter bewirkt.

Aus der EP 3 184 351 A1 ist ein Energieversorgungssystem in einem Minenfahrzeug bekannt. Das Energieversorgungssystem umfasst dabei wenigstens einen Traktionsstromrichter, mit dem wenigstens einem Fahrmotor elektrische Energie zuführbar ist, und ein Fahrleitungssystem, über das wenigstens ein Fahrmotor durch eine fahrzeugextern erzeugte Versorgungswechselspannung antreibbar ist.

Aus der US 2008/315819 A1 ist ein Multiplex Matrix Umrichter bekannt. Mit diesem ist es möglich, die Größe eines Parallel-Multiplex-Matrixwandlers als Ganzes zu reduzieren. Der Parallel-Multiplex-Matrixwandler koppelt mindestens zwei Matrixwandler parallel, von denen jeder PWM-gesteuerte bidirektionale Schalter die Eingangsphasen einer Wechselstromversorgung an jede Ausgangsphase koppelt, um eine beliebige Wechselspannung oder Gleichspannung auszugeben. Die Ausgangsseiten der Matrixwandler sind direkt und ohne Drossel parallel zueinander gekoppelt. Die Eingangsseiten der Matrixwandler verwenden Drosseln, die zwischen den Eingangsphasen von der Wechselstromversorgung und der Wechselstromversorgung an jedem der jeweiligen parallel gekoppelten Matrixwandler eingefügt sind. Der Erfindung liegt die Aufgabe zugrunde einen Stromrichter hinsichtlich des Einsatzes von Wide-Bandgap-Halbleitern zu optimieren.

Diese Aufgabe wird durch einen modularer Stromrichter mit Wide-Bandgap-Halbleitern, insbesondere SiC Halbleitern, gelöst, wobei der modulare Stromrichter mindestens zwei Grundeinheiten aufweist, wobei die Grundeinheiten eingangsseitig miteinander verbunden sind, wobei eine Grundeinheit eingangsseitig eine Eingangsschaltung und ausgangsseitig eine Ausgangschaltung aufweist, wobei Eingangsschaltung und Ausgangsschaltung jeweils durch die Wide-Bandgap Halbleiter gebildet werden, die in einer B6 Brückenschaltung angeordnet sind, wobei ein Zwischenkreiskondensator parallel sowohl zur Eingangsschaltung als auch zur Ausgangsschaltung verbunden ist und damit die Zwischenkreise der Eingangsschaltung und der Ausgangsschaltung zu einem Zwischenkreis miteinander verbindet, wobei die Eingangsschaltungen der Grundeinheiten oder einer Teilmenge der Grundeinheiten in einer Reihenschaltung angeordnet sind, wobei jeweils zwischen zwei Eingangsschaltungen mindestens eine Induktivität angeordnet ist, wobei eine erste Phase der Eingangsschaltung einer ersten Grundeinheit mittels einer Induktivität mit der ersten Phase der Eingangsschaltung einer zweiten Grundeinheit verbunden ist, wobei eine zweite Phase der Eingangsschaltung der ersten Grundeinheit mittels einer weiteren Induktivität mit der zweiten Phase der Eingangsschaltung der zweiten Grundeinheit verbunden ist und wobei eine dritte Phase jeder der mindestens zwei Grundeinheiten mit einem jeweiligen Widerstand verbunden ist, der ausgebildet ist, die Funktion eines Bremsstellers zu realisieren. Die Aufgabe wird weiter durch ein Fahrzeug, insbesondere durch ein Schienenfahrzeug, mit einem derartigen modularen Stromrichter gelöst, wobei der modulare Stromrichter zumindest ein Teil des Antriebs des Fahrzeugs ist.

Weitere vorteilhafte Ausgestaltungen der Erfindung sind in den abhängigen Ansprüchen angegeben.

Der Erfindung liegt die Erkenntnis zugrunde, dass sich die Aufgabe durch das Verschalten mehrerer, d.h. mindestens zweier, Grundeinheiten lösen lässt. Dabei wird das Problem durch eine standardisierte Grundeinheit gelöst, welche als Halbleiter Wide-Bandgap Halbleiter (typischerweise auf der Basis von SiC) einsetzt von der optimalen Spannungsklasse, was etwa 1700V Sperrspannung sind. 1700V ergeben sich als etwa optimaler Wert, da dort bei dem SiC Bauelement die Dicke noch relativ gering ist und der Durchlassspannungsabfall noch stark vom Kanalwiderstand geprägt ist. Die typische Leistungsklasse der Grundeinheit liegt bei etwa 100kW. Mit anderen Worten weiden die Halbleiter der Eingangsschaltung und/oder der Ausgangschaltung bei einer vorteilhaften Ausgestaltung eine Sperrspannung von 1700V auf.

Die Erfindung stellt eine Lösung dar, wie mit einer in Spannung und Strom kleinen SiC Halbleitern basierten Grundeinheit der gesamte Leistungs- und Spannungsbereich abgedeckt werden kann. Dazu wird die Eigenschaft verwendet, dass immer nur SiC Halbleiter der optimalen kleinen Sperrspannung und des optimalen kleinen Stromes zur Anwendung kommen und die Grundeinheit bilden, von denen dann mehrere je nach Anforderung in Bezug auf Leistung und/oder Versorgungsspannung zusammengeschaltet werden können.

Aus diesen Wide-Bandgap Halbleitern wird eine Grundeinheit definiert, die zweimal drei Phasen, d.h. jeweils eine Eingangsschaltung und eine Ausgangsschaltung mit jeweils drei Phasen, umfasst, sowie einen Zwischenkreis mit einem Zwischenkreiskondensator, sowie zugehörige Verbindungen und die Ansteuerung der Halbleiter. Ferner umfasst die Grundeinheit eine mechanische Integration inklusive Kühlvorrichtung für die Halbleiter. Dabei sind die elektrischen Teile der Grundeinheit gegen die Mechanik und die Kühlung isoliert.

Vorteilhaft dabei ist, dass die Grundeinheit auf der Eingangsseite und/oder der Ausgangsseite parallel und/oder in Reihe zu einer oder mehreren weiteren identischen Grundeinheiten geschaltet wird, und dadurch der Gesamtstrom oder die erreichbare Spannung erhöht wird. Durch eine Parallelschaltung kann der Gesamtstrom, den der modulare Stromrichter zur Verfügung stellen kann, erhöht werden. Dabei kann der modulare Stromrichter auch eine Reihenschaltung, parallelgeschalteter Grundeinheiten aufweisen, die damit sowohl Gesamtstrom erhöhen auch als die erreichbare Spannung vergrößern. Die Grundeinheiten werden auf der Eingangsseite mit Hilfe von Induktivitäten in Reihe geschaltet, um so an eine höhere Spannung anschließbar zu sein. Durch die Induktivitäten ist der Eingangsstrom des modularen Stromrichters steuer- bzw. regelbar. Dabei erfolgt die Serienschaltung so, dass eine Phase einer Grundeinheit jeweils mit einer Induktivität an den Zwischenkreis, beispielsweise an die Minus-Schiene, der nächsten Grundeinheit angeschlossen wird. Die potentialmäßig nächsten Induktivitäten werden dann an die eingangsseitige versorgende positive Seite der DC-Spannung angeschlossen, während die potentialmäßig unterste Minusschiene an dem Minuspol der eingangsseitigen DC Spannung angeschlossen wird. An der dreiphasigen Ausgangsseite kann ein Motor angeschlossen werden mit einem dreisträngigen Wicklungssystem.

Besonders vorteilhaft ist es, wenn bei Verwendung mehrerer Grundeinheiten an den mehreren dreiphasigen Ausgangsseiten ein Motor mit mehreren 3phasigen Wicklungssystemen angeschlossen wird. Das sind zum Beispiel Motoren mit einem 6- oder 9- oder 12-strängigen Wicklungssystem.

Für den Fall einer AC Versorgung ist es vorteilhaft, wenn die eingangsseitige Serienschaltung der Grundeinheiten so erfolgt, dass an der untersten Grundschaltung ein Phasenanschluss an einem Pol der AC-Spannung liegt. Der zweite eingangsseitige Phasenanschluss dann wird mit der zweiten Phase der nächsten Grundeinheit verbunden. Auf eine Induktivität zwischen den Grundeinheiten kann, allerdings nicht notwendigerweise, bei der Verwendung für eine Eingangsseitig anliegende Wechselspannung verzichtet werden. Die erste Phase wird dann wieder mit der ersten Phase der nächsten Grundeinheit verbunden. Dann wieder die zweite Phase mit der darauf folgenden zweiten Phase usw. bis die letzte Phase dann mit dem anderen AC-Anschluss verbunden wird.

Darüber hinaus ist vorteilhaft, dass an der Eingangsseite die speisende Spannung sowohl DC als auch AC sein kann, indem entweder die Grundeinheiten alle wie ein Hochsetzsteller in Serie geschaltet werden oder zwei der Eingangs Phasen jeweils so in Serie mit den zwei Phasen der nächsten Grundeinheit geschaltet werden, dass ein sogenannter 4-Qudrantensteller entsteht.

Darüber hinaus ist es vorteilhaft, wenn an die dritte eingangsseitige Phase der Grundeinheit ein Widerstand angeschlossen wird, der zur Vernichtung von Leistung eingesetzt wird, wenn bei einem Bremsvorgang das Netz nicht die gesamte Bremsleistung aufnehmen kann. Die Funktion dieser Phase wird auch als Bremssteller bezeichnet.

Im Folgenden wird die Erfindung anhand der in den Figuren dargestellten Ausführungsbeispiele näher beschrieben und erläutert. Es zeigen:
- FIG 1: eine Grundeinheit,
- FIG 2: das Schaltbild eines Wide-Bandgap Halbleiters,
- FIG 3: eine Parallelschaltung zweier Grundeinheiten,
- FIG 4 bis FIG 8: Reihenschaltungen von Grundeinheiten,
- FIG 9: einen Motor am Ausgang eines modularen Stromrichters und
- FIG 10: ein Fahrzeug mit einem modularen Stromrichter als Teil des Antriebs.

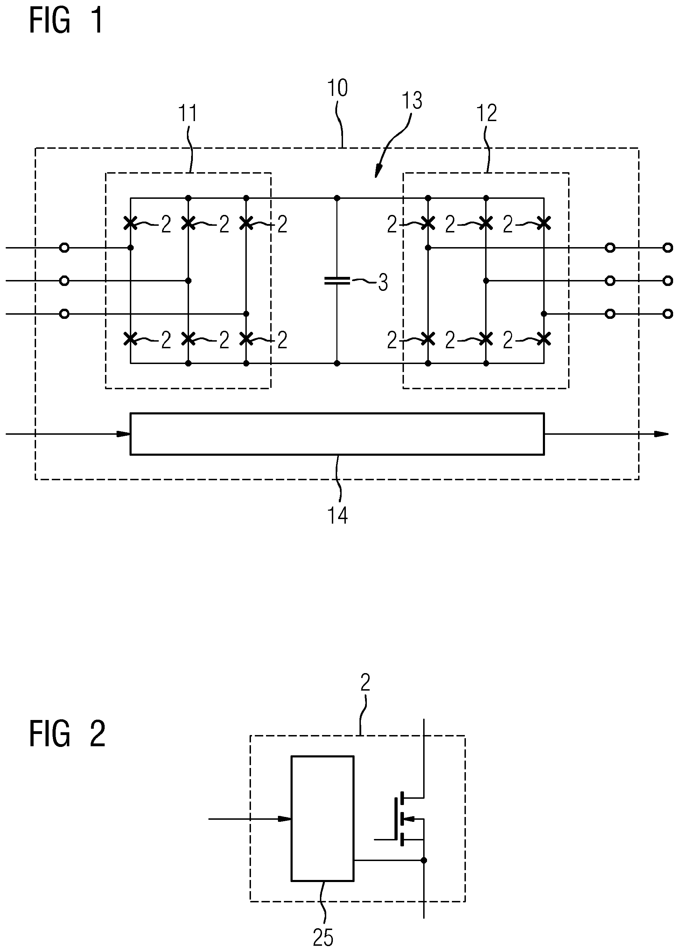

Die FIG 1 zeigt eine Grundeinheit 10. Diese weist eine Eingangsschaltung 11 und eine Ausgangsschaltung 12 auf. Diese sind gleichspannungsseitig zu einem Zwischenkreis 13 miteinander verbunden. Im Zwischenkreis 13 ist ein Kondensator 3 angeordnet. Die Eingangsschaltung 11 und die Ausgangsschaltung 12 weisen jeweils eine B6 Brückenschaltung aus Wide-Bandgap Halbleitern 2 auf. Die Phasenanschlüsse, auch als Phasen bezeichnet sind als Eingänge und Ausgänge nach außen geführt. Zudem weist die Grundeinheit eine Kühleinheit 14 auf. Die Strömung des Kühlmittels, Luft oder Flüssigkeit ist mit Pfeilen gekennzeichnet.

Die FIG 2 zeigt einen Wide-Bandgap Halbleiter 2 mit seiner Ansteuerung 25. In Rückwärtsrichtung ist dieser leitend. Für den Fall, dass dieser in einer Ausführung rückwärts sperrend ausgelegt ist, wird zu dem Halbleiterschalter eine hier nicht dargestellte antiparallele Diode angeordnet, die dem Halbleiter 2 seine Eigenschaft verleiht, in Rückwärtsrichtung leitend zu sein.

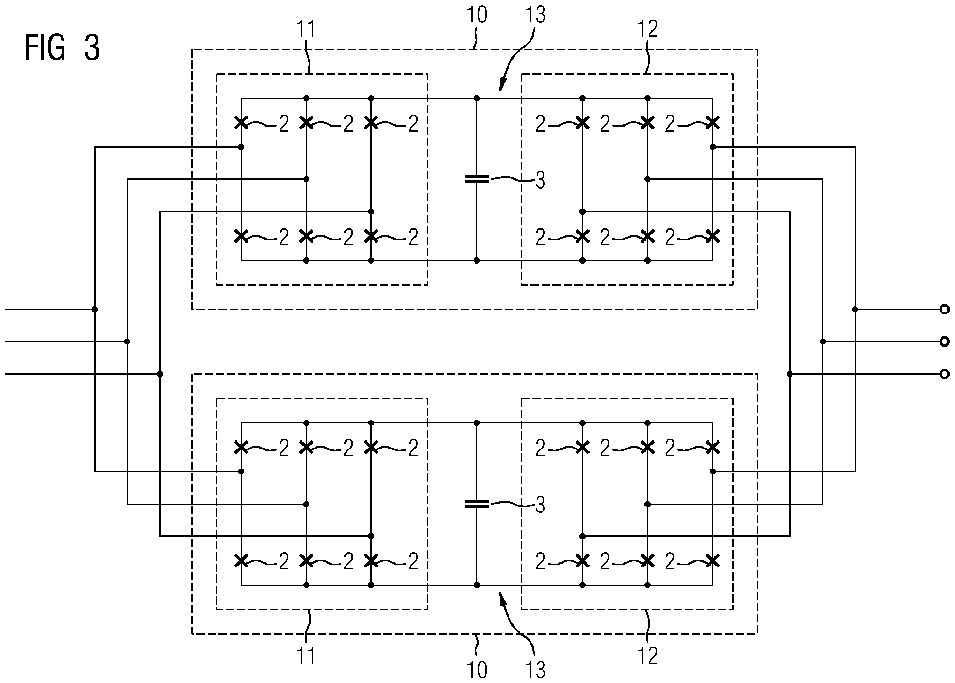

Die FIG 3 zeigt eine Parallelschaltung zweier Grundeinheiten 10. Diese sind sowohl eingangsseitig als auch ausgangsseitig an allen drei Phasen parallelgeschaltet.

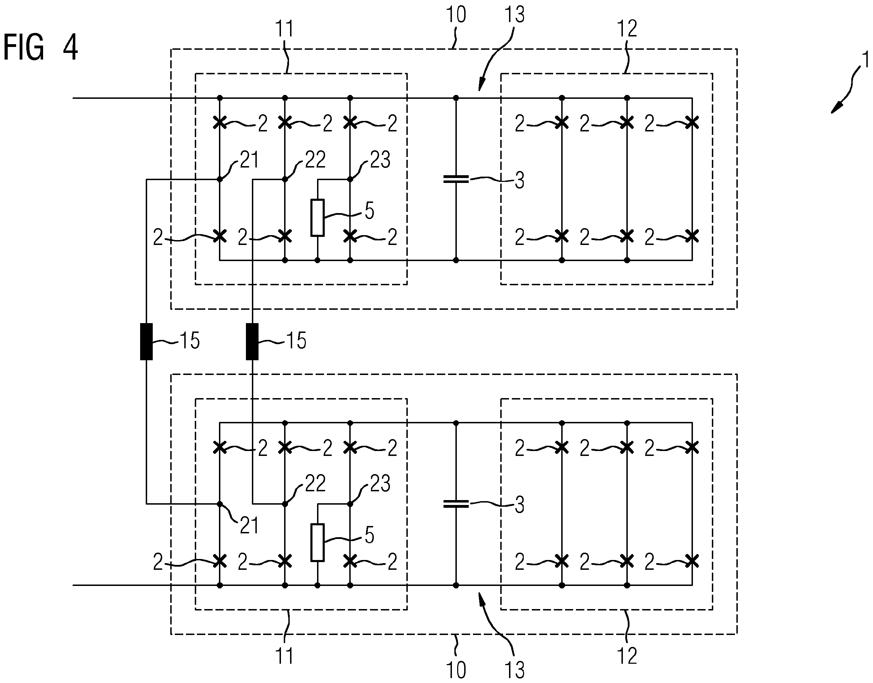

Die FIG 4 zeigt eine Reihenschaltung zweier Grundeinheiten 10. Diese Abbildung zeigt nur das Prinzip der Reihenschaltung. Diese ist auf beliebig viele Grundeinheiten 10 erweiterbar. Ebenso kann eine hier dargestellte Grundeinheit 10 eine Parallelschaltung mehrerer Grundeinheiten 10 sein. Die Parallelschaltung erfolgt eingangsseitig an der Eingangsschaltung. Die erste Phase 21 der ersten Eingangsschaltung ist mit der ersten Phase 21 der zweiten Eingangsschaltung über eine Induktivität 15 verbunden. Darüber hinaus ist auch die zweite Phase 22 der ersten Eingangsschaltung mit der zweiten Phase 22 der zweiten Eingangsschaltung über eine weitere Induktivität 15 verbunden. Die dritte Phase 23 weist einen Bremswiderstand 5 auf, der zu einem Bremssteller verschaltet ist.

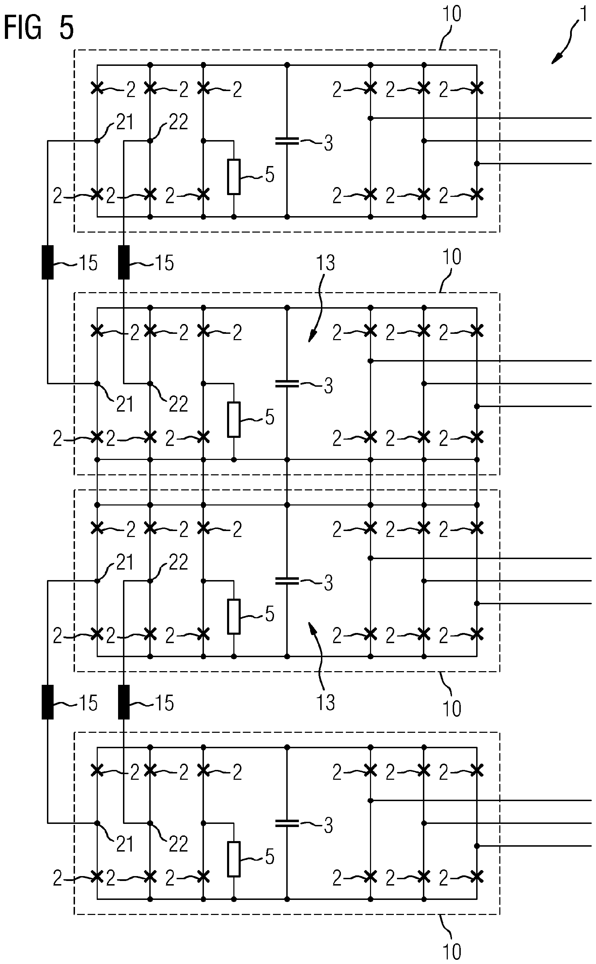

Die FIG 5 zeigt ein weiteres Ausführungsbeispiel einer Reihenschaltung. Auch hier können die einzelnen Grundeinheiten 10 eine beliebige Parallelschaltung mehrerer Grundeinheiten 10 darstellen. Auch lässt sich diese dargestellte Schaltung auf eine Reihenschaltung beliebig vieler Grundeinheiten erweitern. Dabei ist es möglich, zwei Grundeinheiten 10 an der Eingangsschaltung 11 gleichspannungsseitig in Reihe zu schalten. Damit sind dann die Zwischenkreise 13 der betreffenden Grundeinheiten 10 in Reihe geschaltet. Zur Vermeidung von Wiederholungen wird auf die Beschreibung zu der FIG 4 sowie auf die dort eingeführten Bezugszeichen verwiesen.

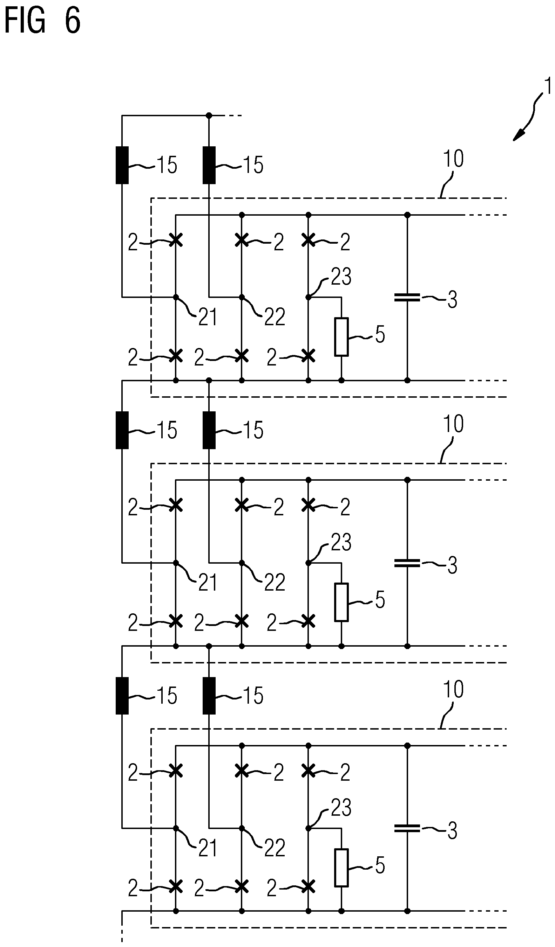

Die FIG 6 zeigt ein nicht erfindungsgemäßes Ausführungsbeispiel einer Reihenschaltung. Auch hier können die einzelnen Grundeinheiten 10 eine beliebige Parallelschaltung mehrerer Grundeinheiten 10 darstellen. Auch lässt sich diese dargestellte Schaltung auf eine Reihenschaltung beliebig vieler Grundeinheiten 10 erweitern. Bei dieser Schaltung sind die erste Phase 21 und die zweite Phase 22 einer ersten Grundeinheit 10 jeweils über eine Induktivität 15 mit dem Zwischenkreis einer zweiten Grundeinheit 10 verbunden. Auch hier können Grundeinheiten 10 auch Verschaltungen der Figuren 4 und 5 aufweisen. Zur Vermeidung von Wiederholungen wird auf die Beschreibung zu den Figuren 4 und 5 sowie auf die dort eingeführten Bezugszeichen verwiesen.

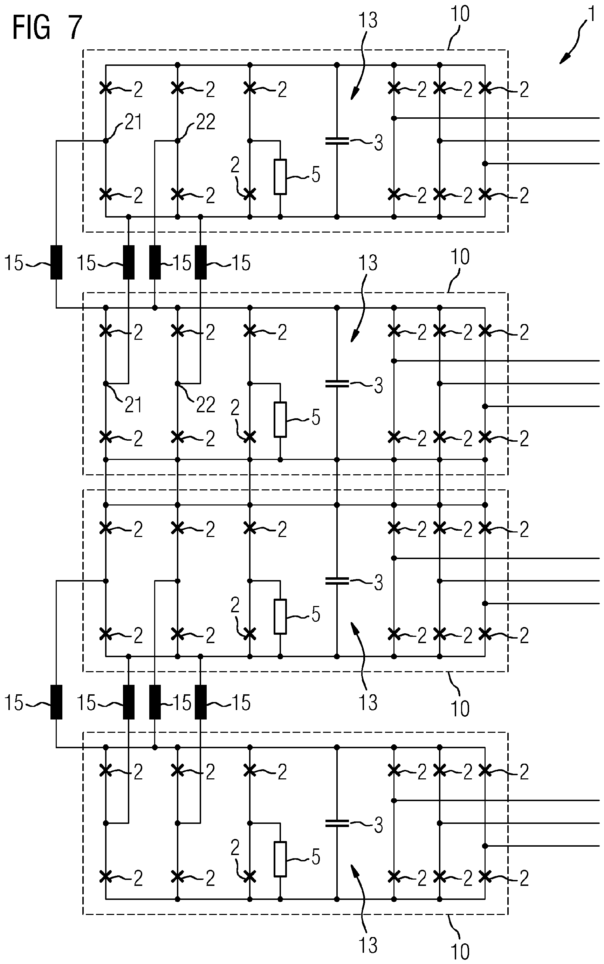

Die FIG 7 zeigt ein nicht erfindungsgemäßes Ausführungsbeispiel einer Reihenschaltung. Auch hier können die einzelnen Grundeinheiten 10 eine beliebige Parallelschaltung mehrerer Grundeinheiten 10 darstellen. Auch lässt sich diese dargestellte Schaltung auf eine Reihenschaltung beliebig vieler Grundeinheiten 10 erweitern. Dabei können Grundeinheiten 10 auch Kombinationen der Figuren 4 bis 6 aufweisen. Bei dieser Schaltung sind nicht nur die erste Phase 21 und die zweite Phase 22 der ersten Grundeinheit 10 jeweils über Induktivitäten 15 mit dem Zwischenkreis 13 der zweiten Grundeinheit 10 verbunden, sondern darüber hinaus auch die erste Phase 21 und die zweite Phase 22 der zweiten Grundeinheit 10 jeweils über Induktivitäten 15 mit dem Zwischenkreis 13 der ersten Grundeinheit 10 verbunden. Zur Vermeidung von Wiederholungen wird auf die Beschreibung zu den Figuren 4 bis 6 sowie auf die dort eingeführten Bezugszeichen verwiesen.

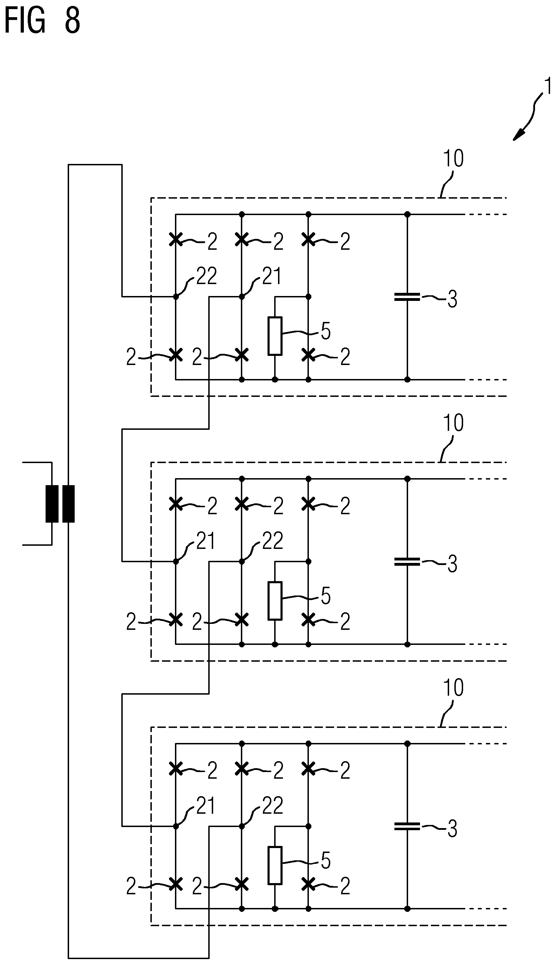

Die FIG 8 zeigt ein nicht erfindungsgemäßes Ausführungsbeispiel für eine Reihenschaltung, die sich im Besonderen für eine Versorgung der Eingangsseite mit einer Wechselspannung eignet. Durch die Induktivität des Transformators kann auf das Einbringen von weiteren Induktivitäten zwischen den Grundeinheiten 10 verzichtet werden. Auch hier können die einzelnen Grundeinheiten 10 eine beliebige Parallelschaltung mehrerer Grundeinheiten 10 darstellen. Auch lässt sich diese dargestellte Schaltung auf eine Reihenschaltung beliebig vieler Grundeinheiten 10 erweitern. In diesem Ausführungsbeispiel ist die erste Phase 21 der ersten Grundeinheit 10 direkt mit der ersten Phase der zweiten Grundeinheit 10 verbunden und die zweite Phase 22 der zweiten Grundeinheit 10 direkt mit einer Phase, in diesem Fall die erste Phase 21, einer dritten Grundeinheit verbunden. Dabei können Grundeinheiten 10 auch Kombinationen der Figuren 4 bis 8 aufweisen. Zur Vermeidung von Wiederholungen wird auf die Beschreibung zu den Figuren 4 bis 8 sowie auf die dort eingeführten Bezugszeichen verwiesen.

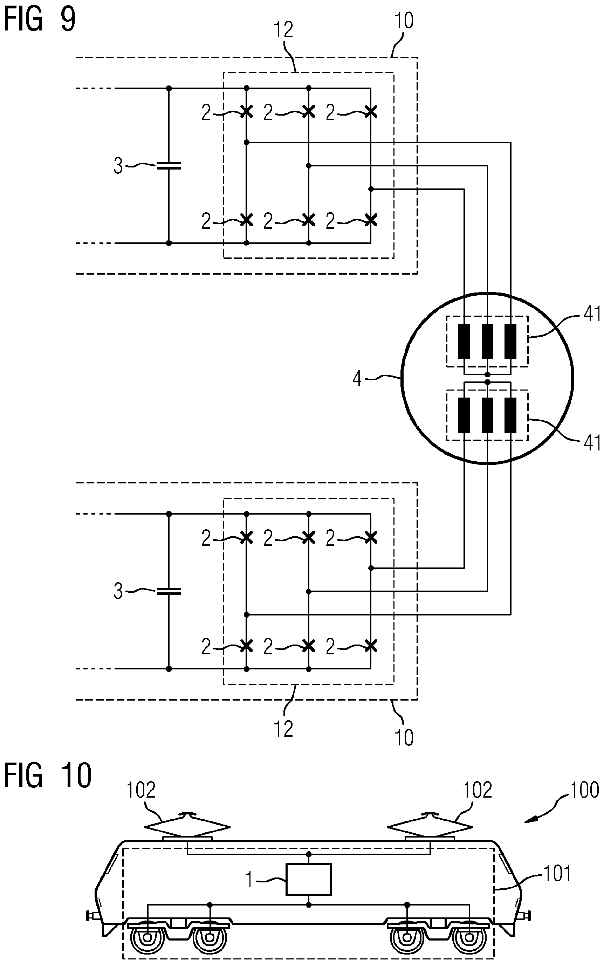

Die FIG 9 zeigt eine mögliche Verbindung der Ausgangsschaltungen 12 mit einem Motor 4. Aus Gründen der Übersichtlichkeit sind die Eingangsschaltungen 11 nicht dargestellt. Diese können beliebig nach einer der Figuren 3 bis 8, oder einer Kombination aus diesen verschaltet sein. Dabei sind die Ausgangschaltungen unterschiedlicher Grundeinheiten 10 jeweils mit einem Wicklungssystem 41 des Motors verbunden. Somit kann auch bei vergleichsweise geringer Leistungsfähigkeit einer Grundeinheit ein Motor 4 mit großer Leistungsfähigkeit angetrieben werden.

Die FIG 10 zeigt ein Fahrzeug 100, das als Schienenfahrzeug ausgebildet ist. Dabei ist der modulare Stromrichter 1 Teil des Antriebs 101 des Fahrzeugs 100. Das Fahrzeug 100 bezieht seine elektrische Anergie über einen Stromabnehmer 102 aus einer nicht dargestellten Fahrleitung und führt diese der Eingangsschaltung des modularen Stromrichters 1 zu. Die Ausgangsschaltung ist mit den hier nicht dargestellten Motoren des Fahrzeugs 100 verbunden und treibe diese an.

Zusammenfassend betrifft die Erfindung einen modularen Stromrichter mit Wide-Bandgap Halbleitern, insbesondere SiC Halbleitern. Zur Optimierung des Stromrichters hinsichtlich des Einsatzes von Wide-Bandgap Halbleitern wird vorgeschlagen, dass der modulare Stromrichter mindestens zwei Grundeinheiten aufweist, wobei die Grundeinheiten eingangsseitig miteinander verbunden sind, wobei eine Grundeinheit eingangsseitig eine Eingangsschaltung und ausgangsseitig eine Ausgangschaltung aufweist, wobei Eingangsschaltung und Ausgangsschaltung jeweils durch die Wide-Bandgap Halbleiter gebildet werden, die in einer B6 Brückenschaltung angeordnet sind mit, wobei ein Zwischenkreiskondensator parallel sowohl zur Eingangsschaltung als auch zur Ausgangsschaltung verbunden ist und damit die Zwischenkreise der Eingangsschaltung und der Ausgangsschaltung zu einem Zwischenkreis miteinander verbindet, wobei die Eingangsschaltungen der Grundeinheiten oder einer Teilmenge der Grundeinheiten in einer Reihenschaltung angeordnet sind, wobei jeweils zwischen zwei Eingangsschaltungen mindestens eine Induktivität angeordnet ist, wobei eine erste Phase der Eingangsschaltung einer ersten Grundeinheit mittels einer Induktivität mit der ersten Phase der Eingangsschaltung einer zweiten Grundeinheit verbunden ist, wobei eine zweite Phase der Eingangsschaltung der ersten Grundeinheit mittels einer weiteren Induktivität mit der zweiten Phase der Eingangsschaltung der zweiten Grundeinheit verbunden ist und wobei eine dritte Phase jeder der mindestens zwei Grundeinheiten mit einem jeweiligen Widerstand verbunden ist, der ausgebildet ist, die Funktion eines Bremsstellers zu realisieren. Ferner betrifft die Erfindung ein Fahrzeug, insbesondere ein Schienenfahrzeug, mit einem derartigen modularen Stromrichter, wobei der modulare Stromrichter ein Teil des Antriebs des Fahrzeugs ist.

## Patentansprüche

1. Modularer Stromrichter (1) mit Wide-Bandgap Halbleitern (2), insbesondere SiC Halbleitern, wobei der modulare Stromrichter (1) mindestens zwei Grundeinheiten (10) aufweist, wobei die Grundeinheiten (10) eingangsseitig miteinander verbunden sind, wobei eine Grundeinheit eingangsseitig eine Eingangsschaltung (11) und ausgangsseitig eine Ausgangschaltung (12) aufweist, wobei Eingangsschaltung (11) und Ausgangsschaltung (12) jeweils durch die Wide-Bandgap Halbleiter (2) gebildet werden, die in einer B6 Brückenschaltung angeordnet sind, wobei ein Zwischenkreiskondensator (3) parallel sowohl zur Eingangsschaltung (11) als auch zur Ausgangsschaltung (12) verbunden ist und damit die Zwischenkreise der Eingangsschaltung (11) und der Ausgangsschaltung (12) zu einem Zwischenkreis (13) miteinander verbindet, wobei die Eingangsschaltungen (11) der Grundeinheiten (10) oder einer Teilmenge der Grundeinheiten (10) in einer Reihenschaltung angeordnet sind, wobei jeweils zwischen zwei Eingangsschaltungen (11) mindestens eine Induktivität (15) angeordnet ist, wobei eine erste Phase (21) der Eingangsschaltung (11) einer ersten Grundeinheit (10) mittels einer Induktivität (15) mit der ersten Phase (21) der Eingangsschaltung (11) einer zweiten Grundeinheit (10) verbunden ist, wobei eine zweite Phase (22) der Eingangsschaltung (11) der ersten Grundeinheit (10) mittels einer weiteren Induktivität (15) mit der zweiten Phase (22) der Eingangsschaltung (11) der zweiten Grundeinheit (10) verbunden ist und wobei eine dritte Phase (23) jeder der mindestens zwei Grundeinheiten (10) mit einem jeweiligen Widerstand (5) verbunden ist, der ausgebildet ist, die Funktion eines Bremsstellers zu realisieren.

2. Modularer Stromrichter (1) nach Anspruch 1, wobei die Grundeinheit (10) eine Kühleinheit (14) aufweist, wobei die Kühleinheit (14) gegenüber den Wide-Bandgap Halbleitern (2) elektrisch isoliert ist.

3. Modularer Stromrichter (1) nach einem der Ansprüche 1 oder 2, wobei eine weitere Teilmenge der Grundeinheiten (10) oder die Eingangsschaltungen (10) einer weiteren Teilmenge der Grundeinheiten (10) in einer Parallelschaltung angeordnet sind.

4. Modularer Stromrichter (1) nach einem der Ansprüche 1 bis 3, wobei die Eingangsschaltungen (11) zweier Grundeinheiten (10) gleichspannungsseitig in einer Reihenschaltung angeordnet sind.

5. Modularer Stromrichter (1) nach einem der Ansprüche 1 bis 4, wobei die Ausgangsschaltungen (12) von mindestens zwei der Grundeinheiten (10) jeweils mit unterschiedlichen Wicklungssystemen (41) eines Motors (4) verbunden sind.

6. Modularer Stromrichter (1) nach einem der Ansprüche 1 bis 5, wobei die Wide-Bandgap Halbleiter (2) als SiC Halbleiter ausgebildet sind und eine Sperrspannung von 1700V aufweisen.

7. Fahrzeug (100), insbesondere ein Schienenfahrzeug, mit einem modularen Stromrichter (1) nach einem der Ansprüche 1 bis 6, wobei das Fahrzeug (100) den modularen Stromrichter (1) als ein Teil des Antriebs (101) des Fahrzeugs (100) aufweist, wobei elektrische Energie aus einer Fahrleitung über einen Stromabnehmer (102) des Fahrzeugs (100) der Eingangsschaltung (11) zuführbar ist.

## Claims

1. Modular power converter (1) with wide-bandgap semiconductors (2), in particular SiC semiconductors, wherein the modular power converter (1) has at least two basic units (10), wherein the basic units (10) are connected to one another on the input side, wherein on the input side a basic unit has an input circuit (11) and on the output side an output circuit (12), wherein input circuit (11) and output circuit (12) are each formed by the wide-bandgap semiconductors (2) which are arranged in a B6 bridge circuit, wherein an intermediate circuit capacitor (3) is connected in parallel both to the input circuit (11) and to the output circuit (12) and thus connects the intermediate circuits of the input circuit (11) and of the output circuit (12) to one another to form an intermediate circuit (13), wherein the input circuits (11) of the basic units (10) or of a subset of the basic units (10) are arranged in a series circuit, wherein in each case at least one inductor (15) is arranged between two input circuits (11), wherein a first phase (21) of the input circuit (11) of a first basic unit (10) is connected to the first phase (21) of the input circuit (11) of a second basic unit (10) by means of an inductor (15), wherein a second phase (22) of the input circuit (11) of the first basic unit (10) is connected to the second phase (22) of the input circuit (11) of the second basic unit (10) by means of a further inductor (15), and wherein a third phase (23) of each of the at least two basic units (10) is connected to a respective resistor (5), which is embodied to realise the function of a braking chopper.

2. Modular power converter (1) according to claim 1, wherein the basic unit (10) has a cooling unit (14), wherein the cooling unit (14) is electrically insulated against the wide-bandgap semiconductors (2).

3. Modular power converter (1) according to one of claims 1 or 2, wherein a further subset of the basic units (10) or the input circuits (10) of a further subset of the basic units (10) are arranged in a parallel connection.

4. Modular power converter (1) according to one of claims 1 to 3, wherein the input circuits (11) of two basic units (10) are arranged in a series circuit on the direct voltage side.

5. Modular power converter (1) according to one of claims 1 to 4, wherein the output circuits (12) of at least two of the basic units (10) are each connected to different winding systems (41) of a motor (4).

6. Modular power converter (1) according to one of claims 1 to 5, wherein the wide-bandgap semiconductors (2) are embodied as SiC semiconductors and have a blocking voltage of 1700V.

7. Vehicle (100), in particular a rail vehicle, having a modular power converter (1) according to one of claims 1 to 6, wherein the vehicle (100) has the modular power converter (1) as a part of the drive (101) of the vehicle (100), wherein electrical energy can be supplied to the input circuit (11) from a catenary via a current collector (102) of the vehicle (100) .

## Revendications

1. Convertisseur (1) modulaire comprenant des semi-conducteurs (2) à bande interdite large, en particulier des semi-conducteurs au SiC, dans lequel le convertisseur (1) modulaire a au moins deux unités (10) de base, dans lequel les unités (10) de base sont reliées entre elles du côté de l'entrée, dans lequel une unité de base a, du côté de l'entrée, un circuit (11) d'entrée et, du côté de la sortie, un circuit (12) de sortie, dans lequel le circuit (11) d'entrée et le circuit (12) de sortie sont formés respectivement par les semi-conducteurs (2) à bande interdite large, qui sont montés en un circuit en pont B6, dans lequel un condenseur (3) de circuit intermédiaire est monté en parallèle, tant avec le circuit (11) d'entrée, qu'également avec le circuit (12) de sortie, et relié ainsi entre eux les circuits intermédiaires du circuit (11) d'entrée et du circuit (12) de sortie en un circuit (13) intermédiaire, dans lequel les circuits (11) d'entrée des unités (10) de base, ou d'un nombre partiel des unités (10) de base sont montés en un circuit série, dans lequel au moins une inductance (15) est montée respectivement entre deux circuits (11) d'entrée, dans lequel une première phase (21) du circuit (11) d'entrée d'une première unité (10) de base est reliée au moyen d'une inductance (15) à la première phase (21) du circuit (11) d'entrée d'une deuxième unité (10) de base, dans lequel une deuxième phase (22) du circuit (11) d'entrée de la première unité (10) de base est reliée au moyen d'une autre inductance (15) à la deuxième phase (22) du circuit (11) d'entrée de la deuxième unité (10) de base et dans lequel une troisième phase (23) de chacune des au moins deux unités (10) de base est reliée à une résistance (5) respective, qui est constituée pour réaliser la fonction d'un régleur de frein.

2. Convertisseur (1) modulaire suivant la revendication 1, dans lequel l'unité (10) de base a une unité (14) de refroidissement, dans lequel l'unité (14) de refroidissement est isolée électriquement par rapport aux semi-conducteurs (2) à bande interdite large.

3. Convertisseur (1) modulaire suivant l'une des revendications 1 ou 2, dans lequel un autre nombre partiel des unités (10) de base ou les circuits (10) d'entrée d'un autre nombre partiel des unités (10) de base sont montés en un circuit en parallèle.

4. Convertisseur (1) modulaire suivant l'une des revendications 1 à 3, dans lequel les circuits (11) d'entrée de deux unités (10) de base sont montés, du côté de la tension continue, en un circuit série.

5. Convertisseur (1) modulaire suivant l'une des revendications 1 à 4, dans lequel les circuits (12) de sortie d'au moins deux des unités (10) de base sont reliés respectivement à des systèmes (41) d'enroulement différents, d'un moteur (4).

6. Convertisseur (1) modulaire suivant l'une des revendications 1 à 5, dans lequel les semi-conducteurs (2) à bande interdite large sont constitués sous la forme de semi-conducteurs au SiC, et ont une tension de blocage de 1700V.

7. Véhicule (100), en particulier véhicule ferroviaire, comprenant un convertisseur (1) modulaire suivant l'une des revendications 1 à 6, dans lequel le véhicule (100) a le convertisseur (1) modulaire sous la forme d'une partie de l'entraînement (101) du véhicule (100), dans lequel de l'énergie électrique peut être envoyée au circuit (11) d'entrée, à partir d'une caténaire par un appareil (22) de prise de courant du véhicule (100).
